Europäisches Patentamt

**European Patent Office**

**Office européen des brevets**

(11) Publication number: **0 073 083**
**A1**

(12) # EUROPEAN PATENT APPLICATION

(21) Application number: **82201026.0**

(22) Date of filing: **16.08.82**

(51) Int. Cl.³: **F 16 L 7/00**

(30) Priority: **20.08.81 NL 8103887**

(43) Date of publication of application:
**02.03.83 Bulletin 83/9**

(84) Designated Contracting States:
**AT BE CH DE FR GB IT LI LU NL SE**

(71) Applicant: **WAVIN B.V.**
**251 Händellaan**
**NL-8031 EM Zwolle(NL)**

(72) Inventor: **de Lange, Tinus, Mr.**
**95 Noorderweg**
**NL-7681 CH Vroomshoop(NL)**

(74) Representative: **van der Veken, Johannes Adriaan,**
**Ir. et al,**
**EXTERPATENT 3 & 4 Willem Witsenplein**
**NL-2596 BK The Hague(NL)**

(54) Sealing ring.

(57) A sealing ring in the form of a sleeve 4 of flexible, resilient material is adapted to seal off a space between two pipes 1, 2, installed concentrically about each other.

The front surface of the sealing ring, sleeve, resp. comprises one open recess designed to form two legs 6a, 6b of a joining body in a C-shaped cross-sectional surface of the ring, sleeve 4, respectively.

A form-stabilized ring 5 fits in the said recess and the said legs 6a, 6b adjoin the latter after instalment of the sealing ring in the form of sleeve 4.

FIG. 2.

0073083

Sealing ring

The invention relates to a sealing ring adapted to seal off a space
between two pipes installed concentrically about each other, the
front face of said ring comprising an open recess designed to form
two legs of a joining body in a C-shaped cross-sectional surface of
the ring, such as is disclosed in Netherlands patent application
6503163.

The legs of the cross-sectional C-shaped section in this known
sealing ring which may consist of plastics, are in an unstressed
condition of the ring positioned slightly diverging from each
other. After the instalment of the ring said legs will adjoin an
inner pipe and an outer pipe in a tensioned condition, so that the
space between the concentric pipes is sealed off and a penetration
of moisture is prevented. As this known sealing ring is also used
as a spacer means its material shoud have form-stabilized properties.

It is further desired that the material of the sealing ring be
flexible, so as to ensure a good seal against the penetration of
moisture into the space between the concentric pipes so that the
insulating properties of thermic insulating material situated in
said space are maintained. It is, however, a disadvantage of sealing
rings of flexible, easily deformable material, that their instalment
is rather difficult, whilst the functional properties of the spacer
means between the two pipes are considerably reduced.

It is an object of the present invention to provide a novel sealing

-2-

which possesses excellent sealing properties and is yet easily to be mounted, whilst in addition a certain formstability can be obtained so that the sealing ring can also be used as a spacer means.

This is attained according to the invention with a sealing ring of the kind as described hereinbefore, which is characterized in that said ring is a sleeve of a flexible resilient material, a form-stabilized ring fitting in the recess, the legs adjoining the latter after the sleeve has been installed.

The advantage of this feature is that both the sealing ring and the form-stabilized ring can be easily mounted upon the inner pipe and subsequently be pressed further into the space between the inner pipe and the outer pipe by performing an axial pressure upon the form-stabilized ring, the use of the latter causing the concentric configuration of the sealing ring of flexible resilient material with respect to the pipes, to be maintained.

The invention also relates to a pipe assembly provided with a sealing ring according to the invention.

The present invention is illustrated with the aid of the accompanying drawings, wherein:

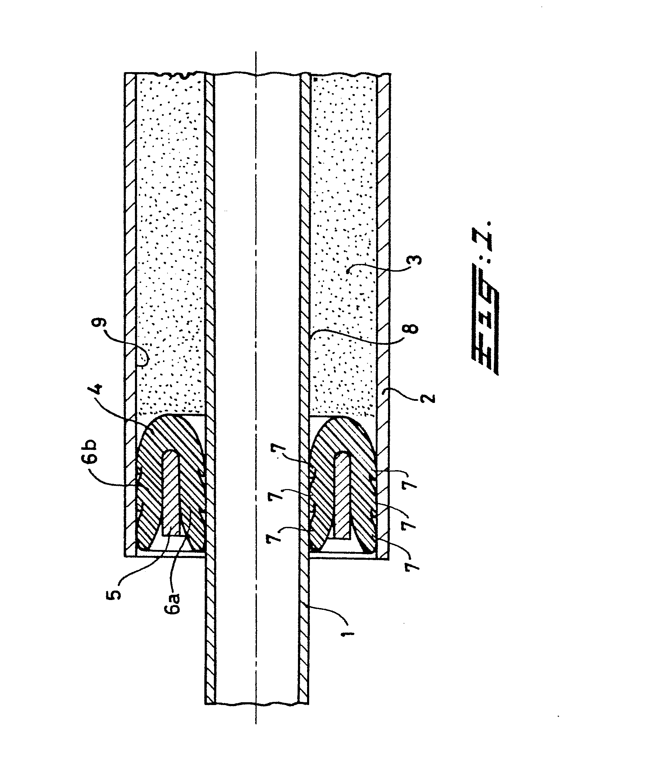

Figure 1 is an axial section through the ends of two pipes installed concentrically about each other, the space between said pipes being provided with thermic insulating material, and a sealing ring according to the invention;
Figure 1 is half an axial section of two concentric pipes, with a section of the sealing ring of fig. 1 prior to an instalment between the pipes, and
Figure 3 is a similar section as fig. 2, the sealing ring, however, being shown in a modified embodiment.

In insulated pipes, for example for conveying hot water, a fluid pipe 1 is used with a concentric tubular casing 2. The space between the pipe 1 and casing 2 is filled with a thermic insulating material 3. To prevent moisture to arrive at the insulating material from the ends of the pipes e.g. at couplings or other joining means, a sealing ring is used in the form of a sleeve 4. One front face of the sealing ring or sleeve 4 comprises an open recess designed to form two legs 6a and 6b of a joining body in a C-shaped cross-sectional surface of the ring which is a sleeve of flexible resilient material cooperating with a form-stabilized ring 5 fitting in said recess, the legs 6a and 6b adjoining the latter when the sleeve has been mounted (depicted in the cross-section of fig. 1). As is evident from the latter figure at the sides not facing the recess, legs 6a and 6b comprise protruding tongues 7 which form circumferential ribs at the inner and outer circumference of the ring.

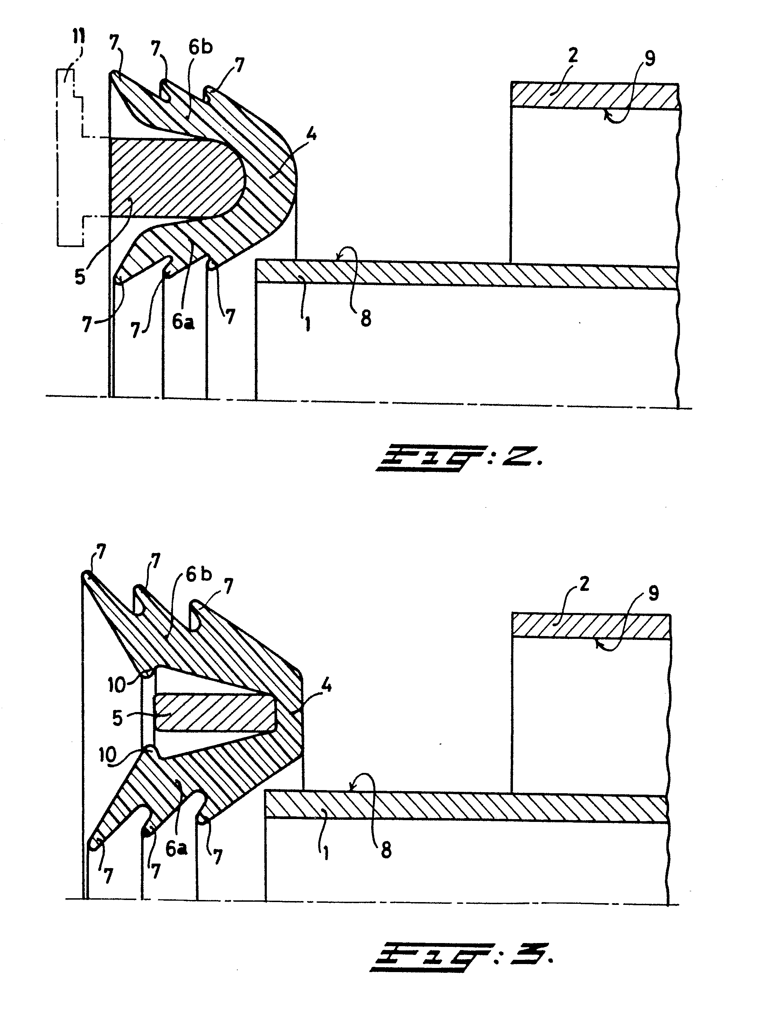

From figs. 2 and 3 it appears that legs 6a and 6b converge towards their joining body in case of an unstressed position of sleeve 4. In fig. 2 the joining body between the two legs 6a and 6b has a curved shape, while the form-stabilized ring 5 comprises a curved front surface adapted to the curved shape of the joining body facing the recess.

In a modified embodiment at least one of the legs 6a and 6b comprises a tongue 10, directed towards the other leg at the recess at distance from the joining body, said tongue forming a circumferental rib and fitting across a front surface of the form-stabilized ring 5 situated in the recess. Fig. 3 shows a tongue 10 installed at both legs 6a and 6b. In this embodiment the ends of the legs 6a and 6b extend tapering and form diverging end parts of the sleeve as also shown in fig. 1.

Installing the sealing ring according to the invention proceeds as follows. The recess of the sleeve 4 is provided with a form-stabilized ring 5 and this assembly is slid upon the projecting outer circumference 8 of the inner pipe or fluid pipe 1, leg 6a then adjoining the inner circumference of the form-stabilized ring 5. Subsequently, the pressing procedure of the assembly of sleeve 4 and ring 5 is continued until leg 6b contacts the inner circumference 9 of the tubular casing 2. Leg 6b then adjoins the outer circumference of the form-stabilized ring 5. The installed position is shown in fig. 1. If necessary, the instalment of the sleeve with the form-stabilized ring in said space between the fluid pipe 1 and the tubular casing 2, may be performed by means of a separate pressure ring in the form of a pipe end. After having retracted said pipe end the tongue(s) will enclose the form-stabilized ring 5 (see also fig. 3).

The front surface of the form-stabilized ring 5 not facing the sleeve, may be provided with a circumferential collar 11, which fits against the front surface of the outer pipe or tubular casing 2 (see the dot-dash-line in fig. 2). The latter feature is of importance in the event that a branch pipe to be provided with an insulating casing at the branch connection, is connected to the fluid pipe 1. The pressures occurring as a result of the branch connection, may then be transmitted to the tubular casing 2 via the circumferential collar 11, thus causing any displacements of the branch pipes to be absorbed by the said tubular casing 2.

It is observed that the reference numerals in the claims are not intended to restrict the scope thereof, but are only denoted for clarification.

-1-

CLAIMS

1. A sealing ring adapted to seal off a space between two pipes installed concentrically about each other, the front surface of said ring comprising one open recess designed to form two legs of a joining body in a C-shaped cross-sectional surface of the ring, characterized in that the ring is a sleeve (4) of flexible resilient material, a form-stabilized ring (5) fitting in the recess the legs (6a, 6b) adjoining the latter after the sleeve (4) has been installed.

2. A sealing ring according to claim 1, characterized in that the sides of the legs (6a, 6b) not facing the recess comprise protruding tongues (7) which form the circumferential ribs at the inner and outer circumference of the sleeve (4).

3. A sealing ring according to claim 1, characterized in that the legs (6a, 6b) converge towards their joining body in an unstressed condition of the sleeve.(4)

4. A sealing ring according to claim 1, characterized in that a joining body between the two legs (6a, 6b) has a curved shape and a front surface of the form-stabilized ring (5) is adapted to the curved shape of the joining body facing the recess.

5. A sealing ring according to claim 1, characterized in that at the side of the recess at distance from the joining body, at least one of the legs (6a, 6b) comprises a tongue (10) directed towards the other leg which tongue forms a rib and fits across a front surface of the form-stabilized ring (5) installed in the recess.

6. A sealing ring according to claim 1, characterized in that the ends of the legs (6a, 6b) extend tapering and form end parts of the sleeve (4) diverging from one another.

7. A sealing ring according to claim 1, characterized in that at the front surface not facing the sleeve (4) the form-stabilized ring (5) comprises a circumferential collar (11) which fits against the front surface of the outer pipe (2).

0073083

-2-

8. A pipe assembly provided with a sealing ring according to one or several of claims 1-6.

Fig. 1.

0073083

_FIG: 2._

_FIG: 3._

European Patent
Office

**EUROPEAN SEARCH REPORT**

**0073083**
Application number

EP   82 20 1026

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 L   7/00 |
| X | DE-A-1 922 819   (WUNDERLICH)  *Figure 5* | 1,3,4, 6,7 | |
| | --- | | |
| X | US-A-2 935 349   (BURCH)  *Figures* | 1,2,3, 4 | |
| | --- | | |
| A | US-A-4 199 157   (SKINNER)  *Figures* | 1,5 | |
| | --- | | |
| A | DE-A-2 147 489   (BELZIG) | | |
| | ----- | | |

| | TECHNICAL FIELDS SEARCHED (Int. Cl. ³) |
|---|---|
| | F 16 L |

The present search report has been drawn up for all claims

| Place of search THE HAGUE | Date of completion of the search 05-11-1982 | Examiner HUBEAU M.G. |
|---|---|---|